# EUROPÄISCHE PATENTSCHRIFT

(11) **EP 1 125 488 B1**
(45) Veröffentlichungstag und Bekanntmachung des Hinweises auf die Patenterteilung: **14.07.2004**
(21) Anmeldenummer: 01103495.6
(22) Anmeldetag: 15.02.2001
(51) Int. Cl.: A01B 61/04

(54) **Bodenbearbeitungsgerät mit Überlastsicherung**
Overload protected soil working tool
Outil de travail du sol avec protection contre la surcharge

(30) Priorität: 17.02.2000 DE 10007156; 17.02.2000 DE 10007157; 10.05.2000 DE 20008386 U
(43) Veröffentlichungstag der Anmeldung: 22.08.2001
(73) Patentinhaber: Lemken GmbH & Co. KG, 46519 Alpen (DE)
(72) Erfinder: Terboven, Johannes, D-46519 Alpen (DE); von Stepbandt, Johannes, D-46519 Alpen (DE)
(74) Vertreter: Schulte, Jörg, Dipl.-Ing.

(56) Entgegenhaltungen:
- WO-A-98/37750
- CA-A- 2 199 335
- FR-A- 2 498 875
- US-A- 2 776 614
- US-A- 2 777 378

## Beschreibung

Die Erfindung betrifft ein Bodenbearbeitungsgerät mit Überlastsicherung für Zinkenelemente, die mit Scharen ausgerüstet um eine waagerechte und quer zur Arbeitsrichtung angeordnete Achse mit dem Rahmen schwenkbar verbunden sind, wobei dem Zinkenelement ein Energiespeicher zugeordnet ist, der jeweils im Abstand zur Achse sowohl mit dem Rahmen als auch mit dem Zinkenelement über waagerecht und quer zur Arbeitsrichtung angeordete Gelenkachsen verbunden ist, wobei die hintere Gelenkachse Teil eines Gelenklagers ist, das eine V-förmige Lagerspitze und eine V-förmige Aufnahme aufweist und wobei die V-förmige Lagerspitze in die V-förmige Aufnahme eingreifend und sich dagegen abstützend ausgebildet ist.

Ein derartiges Bodenbearbeitungsgerät mit sogenannter Überlastsicherung ist der französischen Patentanmeldung FR-A-2362 562 vom Grundsatz her zu entnehmen. Die Gelenke sind alle mit runden Achsen und Bohrungen ausgestattet. Diese Art der Überlastsicherung fordert ein ständiges Abschmieren der Gelenkachsen, was letztendlich einen Verschließ nur mindert, jedoch nicht verhindern kann. Die US-PS 5 565 796 zeigt ebenfalls ein Bodenbearbeitungsgerät mit Überlastsicherung, bei dem praktisch alle Gelenkpunkte aus Achsen und Bohrungen gebildet werden, die einem erheblichen Verschleiß unterworfen sind. Insbesondere im Einsatz auf Großbetrieben wird bei einer Überlastsicherung gemäß US-PS 5 465 796 ein großer Abschmier- und Wartungsaufwand erforderlich. Trotzdem kann bei einer solchen Ausführung ein Verschleiß der Gelenke und der vielen Bauteile nicht vermieden werden. Die FR-A-2498875 zeigt eine Lösung gemäß Oberbegriff des Anspruches 1 und Anspruch 9. Die miteinander korrespondierenden Teile sind gesondert ausgeformt, was aufwendig und bezüglich Verschleiß ungünstig ist oder sind einem schwer zu bearbeitenden Teil zugeordnet.

Der Erfindung liegt daher die Aufgabe zu Grunde, ein Bodenbearbeitungsgerät mit Überlastsicherung zu schaffen, das wartungsfrei oder zumindest wartungsarm ist.

Die Aufgabe wird gemäß der Erfindung zunächst durch die kennzeichnenden Merkmale des Anspruches 1 und dann auch des Anspruches 9 gelöst.

Bei einem gemäß Anspruch 1 ausgebildeten Bodenbearbeitungsgerät ist eine Überlastsicherung verwirklicht, die praktisch im Bereich des größten Verschleißrisikos wartungsfrei und verschleißfrei ist. Dort wo aufgrund der Gelenkreibung und dem vorhandenen Gewinde eine erhöhte Bruchgefahr besteht, wird diese Bruchgefahr zu 100 % eliminiert, da keine Biegespannungen mehr vorhanden sind. Vorteilhaft ist weiter, dass eine solche Ausbildung der Gelenkachse, insbesondere der hinteren Gelenkachse leicht überwacht werden kann, so dass selbst bei auftretenden Problemen diese schneller erkannt und wenn überhaupt notwendig behoben werden können. Insbesondere bei Bodenbearbeitungsgeräten, wie Dreh-, Aufsattel- oder Anhängedrehpflügen, die auf Großbetrieben mit leistungsstarken Traktoren eingesetzt werden, kommt es auf eine hohe Schlagkraft an. Dies bedeutet aber, dass die Stillstandsarbeiten für Wartungsarbeiten gegen Null gehen müssen. Die wichtigen und hochbelasteten Bauteil dürfen nicht verschleißen. Gerade diese Voraussetzungen werden mit Hilfe der erwähnten Merkmale erreicht. Durch die besondere Ausbildung eines Sektionsbolzens ist es möglich, diesen einfach zu führen, wobei als Führung einfache Bohrungs- und Bolzenkonstruktionen verwendet werden, die aufgrund der geringen Belastung der Bauteile letztendlich keinem Verschleiß unterliegen. Die Bauteile werden in Ruhelage in Positionen gehalten, während der Arbeit sind sie unbelastet, da alle Kräfte und Belastungen von den V-förmigen Lagerspitzen und V-förmigen Aufnahmen übernommen werden.

Nach einer zweckmäßigen Weiterbildung der Erfindung ist vorgesehen, dass dass jedes Gelenklager aus einer V-förmigen Lagerspitze und aus einer V-förmigen Aufnahme besteht und Mittel vorgesehen sind, die die V-förmige Lagerspitze und die V-förmige Aufnahme in Anlage haltend ausgebildet sind. Durch diese Ausführung wird erreicht und sichergestellt, dass trotz einer fehlenden üblichen formschlüssigen Verbindung der Bauteile, alle Bauteile fixiert sind und von daher keine Funktionseinbuße zu erwarten ist. Alle entscheidenden Gelenke bzw. Gelenkachsen sind mit Hilfe der erfindungsgemäßen Lösung so ausgestaltet, dass sie wartungs- und verschleißarm arbeiten oder sogar wartungs- und verschleißfrei sind.

Eine zweckmäßige und einfache einstellbare Überlastsicherung mit wartungsarmen bzw. verschleißarmen Gelenklagern ist geschaffen, wenn, wie erfindungsgemäß vorgesehen, der Energiespeicher mindestens eine Zugstange mit Anschlagteller, eine Stangenführung mit Anschlagteller mit mindestens einer zwischen den Anschlagtellern vorgesehenen und durch die Zugstange geführten Druckfeder umfaßt, dass die Zugstange endseitig ein Gewindeteil aufweist und durch die Stangenführung hindurchführbar und über eine Spannvorrichtung, vorzugsweise eine Mutter, die Druckfeder vorspannend ausgebildet ist. Hierdurch wird in einfacher und kostengünstiger Weise eine Überlastsicherung gebildet, die einfach einstellbar und vorspannbar ist, wobei der Energiespeicher mit Zugstange und Druckfeder nur eine Form von einsetzbaren Energiespeichem darstellt, die mit der Erfindung zu verwirklichen sind. Dort wo Überlastsicherungen mit extrem hohen Rückstellkräften gefordert sind, können auch Hydraulikzylinder als Energiespeicher eingesetzt werden, wobei es belanglos ist, ob für alle Hydraulikzylinder ein großer Hydrospeicher oder für jeden Hydraulikzylinder ein kleinerer Hydrospeicher vorgesehen wird oder ob das Öl im Hydraulikzylinder bei einer Überlastung über ein Überdruckventil oder über ein elektronisch geregeltes Hydrauliksteuersystem in den Öltank des Traktors zurückgeführt wird. Hieraus wird deutlich, wie vielseitig die erfindungsgemäße Lösung mit den zweckmäßigen Lagerausbildungen ist.

Eine zweckmäßige und andererseits gut überwachbare Ausführung ist die, bei der die Zugstange rahmenseitig ein mit dem Querschnitt des Sektionsbolzens korrespondierendes Loch aufweist, in dem der Sektionsbolzen untergebracht ist, dass die Stangenführung rechts und links Sektionsbolzenansätze mit V-förmigen Lagerspitzen aufweist und dass die Spitzen der V-förmigen Lagerspitzen nach außen weisend angeordnet sind. Während der Arbeit wird der Energiespeicher mit Druck belastet, der über die Spitzen der V-förmigen Lagerspitzen des Energiespeichers übernommen wird. Durch die Abstützung über die Lagerspitzen werden Gelenke geschaffen, die wartungsfrei und praktisch verschleißfrei sind. Dadurch dass die Stangenführung beidseitig Sektionsbolzenansätze mit V-förmigen Lagerspitzen aufweist, kann sie dazwischen liegend hindurchgeführt werden. Diese konstruktive Ausführung ist einfach und funktionell.

Zweckmäßig ist es gemäß der Erfindung weiter, dass die förmigen Aufnahmen einen größeren Winkel aufweisen, als die V-förmigen Lagerspitzen mit dem entsprechenden Winkel. Der größere Winkel der V-förmigen Aufnahme läßt dementsprechend ein Kippen der V-förmigen Lagerspitze und damit ein Auslösen des Zinkenelementes des Bodenbearbeitungsgerätes zu. Je größer die Differenz der Winkel ist, umso größer ist der Ausweichweg des Zinkenelementes.

Eine sichere Fixierung ist gewährleistet, weil nach einer zweckmäßigen Weiterbildung der Erfindung vorgesehen ist, dass die V-förmigen Aufnahmen einen mit dem Teilkreis des Sektionsbolzens bzw. der Sektionsbolzenansätze korrespondierenden Radius aufweisen. Durch diese Ausführungsform wird trotz der V-förmigen und verschleißfreien Konstruktion der Gelenke der Vorteil einer üblichen Lagerung mit Rundvbolzen und Rundbohrung hinsichtlich Fixierung erreicht. Der Sektionsbolzen mit der V-förmigen Lagerspitze wird in einem Bauteil, z. B. dem Zinkenelement, verdrehsicher fixiert und stützt sich über die Lagerspitze in Belastungsrichtung ab und wird auf der unbelasteten Rückseite wie ein normaler Rundbolzen geführt.

Schließlich ist vorgesehen, dass mindestens ein Anschlaghebel vorgesehen ist, der über eine Vorspannkraft den Sektionsbolzen mit seiner Spitze in die V-förmige Aufnahme drückend ausgebildet ist und dass die Vorspannkraft größer ist als die Gewichtskraft des Zinkenelementes mit Scharen. Diese konstruktive Ausführung stellt sicher, dass das Zinkenelement nach dem Auslösen wieder zurückschwenken kann, ohne die umliegenden Bauteil zu hoch zu belasten. Bei Überlastung gibt der Anschlaghebel gegen die Vorspannkraft nach und schützt daher vor Überlastungen zusätzlich. Durch die Vorspannkraft, die größer ist als die Gewichtskraft des Zinkenelementes, wird sichergestellt, dass das Zinkenelement immer in Arbeitsstellung gehalten und fixiert ist, und zwar immer spielfrei. Diese Art der spielfreien Gelenkkonstruktion kann bei allen Gelenklagern des Überlastsystems eingesetzt werden.

Um die Vorspannkraft gezielt verändern zu können, sieht die Erfindung vor, dass der Anschlaghebel am Zinkenelement schwenkbar gelagert und über ein Federelement vorgespannt und dass seine Vorspannkraft einstellbar und dass das Spiel zwischen Anschlaghebel und Sektionsbolzen einstellbar ist. Diese Lösung gibt die Möglichkeit, die Vorspannkraft als auch das Spiel so einzustellen, dass die Bauteile, die das Zinkenelement in Arbeitsstellung halten, nur mit einem geringen Anpressdruck belastet sind. Das Spiel in den Gelenken kann durch die entsprechende Einstellung von Stellteilen eliminiert werden.

Eine weitere Lösung der Aufgabe ist den Anschlagteller auf seiner Rückseite eine quer zur Arbeitsrichtung angeordnete V-förmige Kerbe, in die die V-förmige Spitze von Anschlägen eingreifen, die mit dem Zinken mittelbar oder unmittelbar verbunden sind und die Zugstange endseitig eine Fixierung aufweisen zu lassen, die sich auf der Rückseite der Anschläge abstützend ausgeführt ist und den Anschlagteller über die Druckfeder führen zu lassen. Diese Ausführung führt zu einer besonderen Schonung des so erreichten langlebigen Energiespeichers, da aufgrund der besonderen Führung der Zugstange, der Feder und des Anschlagtellers praktisch keine Reibung mehr in den Bauteil auftritt. Die Zugstange wird praktisch nicht mehr unmittelbar geführt, sie wird mittelbar über die Anschläge geführt, die mit ihren V-förmigen Spitzen in die V-förmigen Kerben des Anschlagtellers eingreifen, wobei der Anschlagteller in Relation zur Zugstange wiederum über die Feder geführt bzw. fixiert wird. Umgekehrt wird der Anschlagteller auch die Feder führen, wobei dies von der jeweiligen Betrachtungsweise abhängt. Die Vorspannung in der Druckfeder wird über eine Fixierung erzielt, die sich auf der Rückseite der Anschläge abstützt. Die Fixierung kann eine Spannvorrichtung sein, z. B. eine Mutter, die auf das Gewindeteil der Zugstange aufgeschraubt wird. Sobald die Überlastsicherung anspricht, stützt sich die Spannvorrichtung nicht mehr auf die Anschläge ab, so dass dieser Bereich des Energiespeichers bzw. des Zinkenelementes keinem Verschleiß mehr unterliegt. Während bei der FR 2,498,875-A1 die V-förmigen Spitzen dem Anschlagteller und die V-förmigen Kerben den Anschlägen zugeordnet sind, sieht diese Llösung die genau umgekehrte, wesentlich einfachere herzustellende und dem Anschlagteller eine möglich bessere Führung gebende Anordung von Kerben und Spitzen vor.

Gemäß einer optimalen Weiterentwicklung ist vorgesehen, dass der Anschlagteller außen, endseitig der V-förmigen Kerben Führungskanten aufweist, die ein seitliches Verrutschen der V-förmigen Spitzen der Anschläge verhindernd ausgebildet und angeordnet sind. Hierdurch wird die Zugstange während des Auslösevorganges mittelbar so geführt, dass sie mit Ausnahme des Führungskontaktes mit der inneren Feder mit keinem anderen Bauteil derart in Berührung kommt, dass Reibung auftreten kann.

Weiter ist vorgesehen, dass zwischen der Zugstange und der Feder ein als Verschleißschutz dienendes Kunststoffrohr vorgesehen ist, um so während des Auslösevorganges die Reibkräfte zwischen der Feder bzw. der inneren Feder mit der Zugstange gänzlich zu vermeiden, weil nun das Kunststoffrohr als absoluter Verschleißschutz vorhanden ist. Es brauchen keine unnötigen Reibungskräfte überwunden werden.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:
- Fig. 1: einen als Bodenbearbeitungsgerät ausgebildeten Scheibengrubber in Seitenansicht,
- Fig. 2: eine Detailansicht des Zinkenelementes mit Überlastsicherung und Doppel-V-Lagerung,
- Fig. 3: eine Detailansicht eines Zinkenelementes mit Überlastsicherung und Anschlaghebel,
- Fig. 4: eine perspektivische Darstellung eines Sektionsbolzens,
- Fig. 5: einen Schnitt durch den Sektionsbolzen,
- Fig. 6: einen Ausschnitt einer V-förmigen Lagerspitze und einerV-förmigen Aufnahme,
- Fig. 7: eine alternative Überlastsicherung mit Anschlaghebel und
- Fig. 8: eine Detailansicht mit einer Anschlagtellerführung.

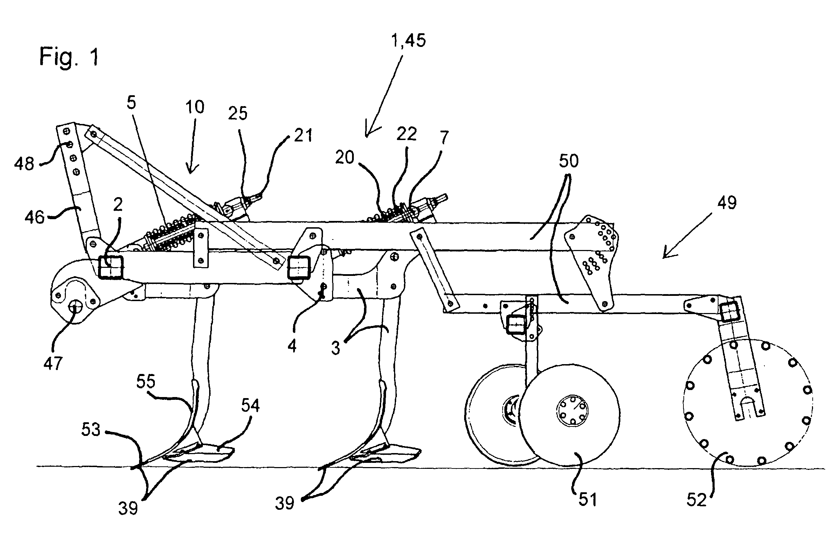

Fig. 1 zeigt ein Bodenbearbeitungsgerät 1, und zwar einen Grubber 45. Der Grubber 45 weist einen Rahmen 2 auf, an dem die Zinkenelemente 3 um die Achsen 4 schwenkbar befestigt sind. Die Zinkenelemente 3 werden über Energiespeicher 5 in Arbeitsstellung gehalten.

Der Energiespeicher 5 ist über die Gelenkachse 6 mit dem Rahmen 2 und der Gelenkachse 7 mit dem Zinkenelement 3 verbunden.

Für den Anbau an einen Traktor weist der Grubber 45 einen Dreipunktturm 46 mit unteren Anlenkpunkten 47 und oberem Anlenkpunkt 48 auf. Der Energiespeicher 5 besteht u. a. aus einer Zugstange 20, Federn 22, 22' und einer Spannvorrichtung 24, hier eine Mutter 25, die auf dem Gewindeteil 21 der Zugstange 20 eine Einstellung der Vorspannkraft ermöglicht, aber auch eine Veränderung der Stellung des Zinkeneiementes 3 mit seinen Scharen 39.

Die Schare 39 sind hier als mehrteilige Schare dargestellt, die aus Scharspitze 53, Flügelschare 54 und Leitblech 55 bestehen. Über ein Parallelgestänge 50 ist eine Einheit 49 mit dem Rahmen des Grubbers 45 verbunden, die sowohl versetzt angeordnete Hohlscheiben 51 als auch eine Nachlaufwalze 52 trägt. Das hintere Gelenklager 7 ist auch allgemein mit 10 bezeichnet.

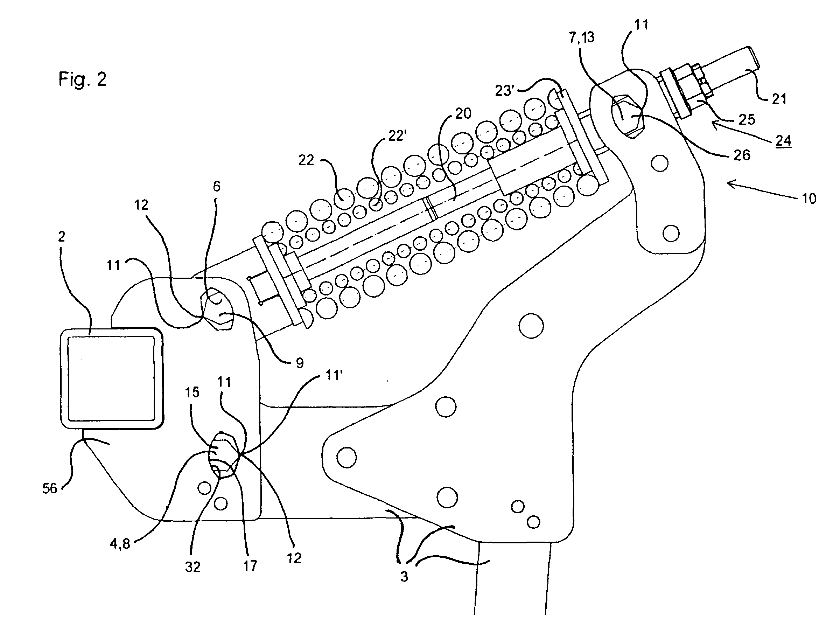

Fig. 2 zeigt eine Detailansicht des am Rahmen 2 angebauten Zinkenelementes 3 mit Energiespeicher 5. Das Zinkenelement 3 ist über den als Achse 7 dienenden Sektionsbolzen 13 mit dem Zinkenelement 3 verbunden. Der Sektionsbolzen 13 weist eine V-förmige Lagerspitze 11 auf. Der Sektionsbolzen 13 ist formschlüssig mit dem Zinkenelement 3 verdrehfest verbunden.

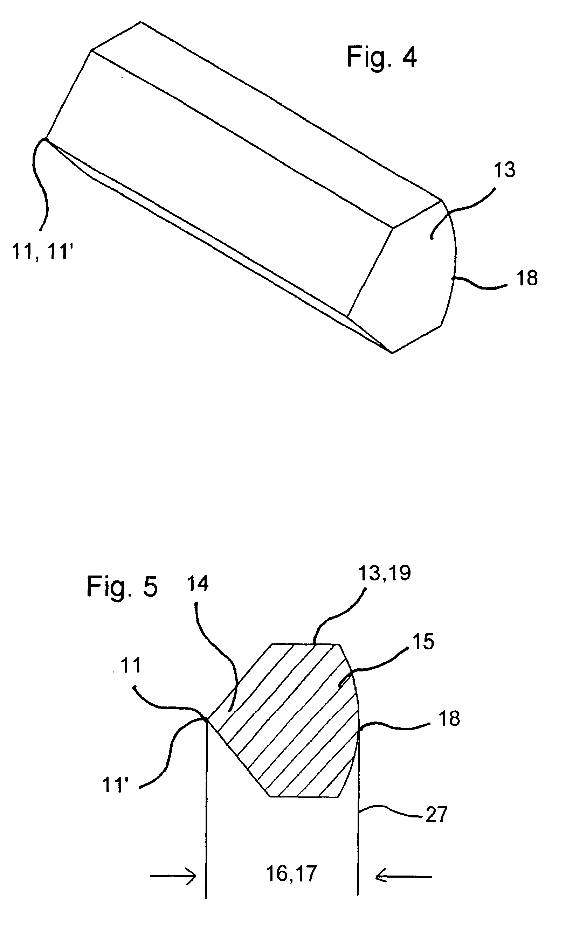

Die V-förmige Lagerspitze 11 stützt sich in der V-förmigen Aufnahme 12 am Zinkenelement 3 bzw. dessen Anschlaghebel 37 ab. Die Spitze 11' der V-förmigen Lagerspitze 11 des Sektionsbolzens 13 bildet den Mittelpunkt des Teilkreises 16 des Sektionsbolzens, wie insbesondere Fig. 4 und 5 verdeutlichen. Der Sektionsbolzen 13 liegt mit seinen teilkreisbogenförmigen Querschnitt 15 auf der der V-förmigen Lagerspitze 11 gegenüber liegenden Seite an den Rahmenplatten bzw. den Anschlaghebeln bzw. dem Zinkenelement 3 an.

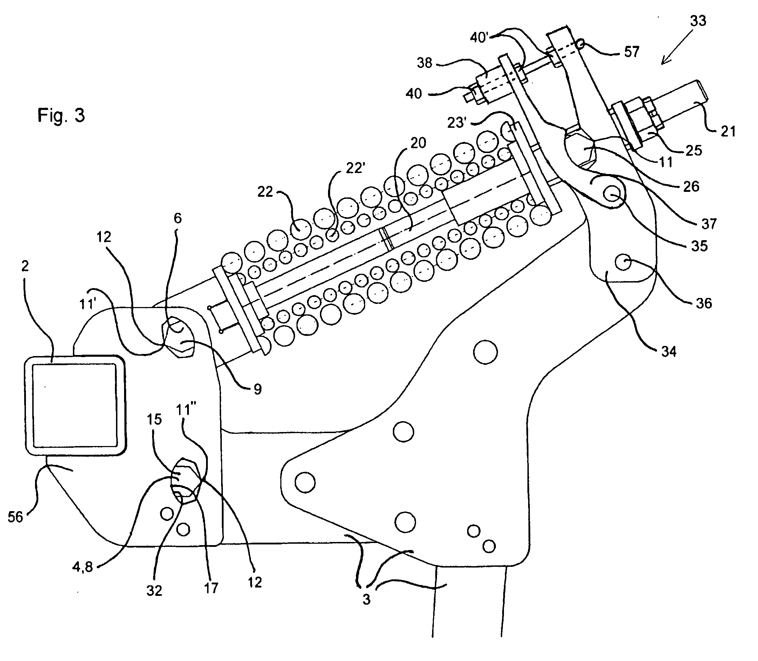

Der Energiespeicher 5 ist mit seiner Zugstange 20 und seiner Stangenführung 23 in ähnlicher Weise mit der Rahmenplatte 56 des Rahmens 2 und dem Zinkenelement 3 verbunden, was insbesondere Fig. 3 zeigt. Die Federn 22, 22' werden auf der Zugstange 20 geführt und stützen sich einerseits gegen den Anschlagteller 20' der Zugstange und andererseits gegen den Anschlagteller 23' der Stangenführung 23 ab. Die Zugstange 20 ist durch die Stangenführung 23 hindurchgeführt und weist endseitig ein Gewindeteil 21 mit Mutter 25 auf. Mit der Mutter 25 wird der komplette Energiespeicher 5 so vorgespannt, dass sowohl die gewünschte Vorspannung als auch die gewünschte Stellung der Scharen 39 erreicht wird.

Fig. 3 zeigt eine Überlastsicherung mit Rückschlagdämpfung 33. Die Rückschlagdämpfung 33 weist einen Anschlaghebel 37 auf, der über die Gelenkschraube 35 mit dem Halter 34 schwenkbar verbunden ist. Der Halter 34 ist über die Gelenkschraube 35 und über die zusätzliche Schraube 36 mit dem Zinkenelement 3 verbunden. Der Anschlaghebel 37 wird über die Spannschraube 57 mit der Feder 38 gegen den teilkreisbogenförmigen Querschnitt der Sektionsbolzenansätze 26 gedrückt. Dabei ist die Kraft der Feder 38 so groß bemessen, dass sie größer ist als die Gewichtskraft des Zinkenelementes 3 mit Scharen 39. Die Feder 38 wird über die Stellmutter 40 vorgespannt. Über die Stellmutter 40' wird der Anschlaghebel 37 von den Sektionsbolzennansätzen 26 weggedrückt, wodurch das Spiel zwischen Anschlaghebel 37 und Bolzenansätze 26 vorteilhaft so eingestellt ist, dass der Anschlaghebel 37 zwar anliegt, aber keinem übermäßigen Druck durch die Feder 38 ausgesetzt wird. Die Rückschlagdämpfung verhindert eine Überlastung aller Bauteile, insbesondere der Zugstange 20 und der Gelenklager 10, wenn das Zinkenelement 3 mit dem Schar 39 nach dem Ausweichen aufgrund eines Bodenhindernisses wieder durch die Kraft der Feder 22, 22' und durch das Eigengewicht in die Arbeitsstellung zurückbewegt wird. Anstatt abrupt abgebremst zu werden, wird der Schlag durch kurzes Nachgeben des vorgespannten Anschlaghebels 37 gedämpft.

Fig. 4 verdeutlicht darüber hinaus, dass genauso wie das Gelenklager 10 auch die Gelenklager 8 und 9 ausgebildet sind, nämlich sie verfügen über eine V-förmige Lagerspitze 11 und eine V-förmige Aufnahme 12, wobei Mittel vorgesehen sind, die die V-förmige Lagerspitze 11 und die V-förmige Aufnahme 12 in Anlage halten. Die Lagerspitzen der Gelenklager 8 und 9 sind mit 11' und 11" bezeichnet.

Fig. 4 zeigt einen Sektionsbolzen 13 in perspektivischer Ansicht. Sie verdeutlicht auch die Ausführung der V-förmigen Lagerspitze 11'. Mit 18 ist der hintere Teilkreis bezeichnet.

Fig. 5 gibt einen Schnitt durch den Sektionsbolzen 13 wieder. Der Querschnitt wird zum einen durch den spitzen Querschnitt 14 und den teilkreisbogenförmigen Querschnitt 15 gebildet. Der Teilkreis 18 weist einen Abstand 16 zu der V-förmigen Lagerspitze 11 auf, der dem Radius 17 des Teilkreises 18 entspricht. Mit 27 ist die Tangente an den Teilkreis 18 bezeichnet und mit 19 die Sektionsbolzenansätze der Sektionsbolzen.

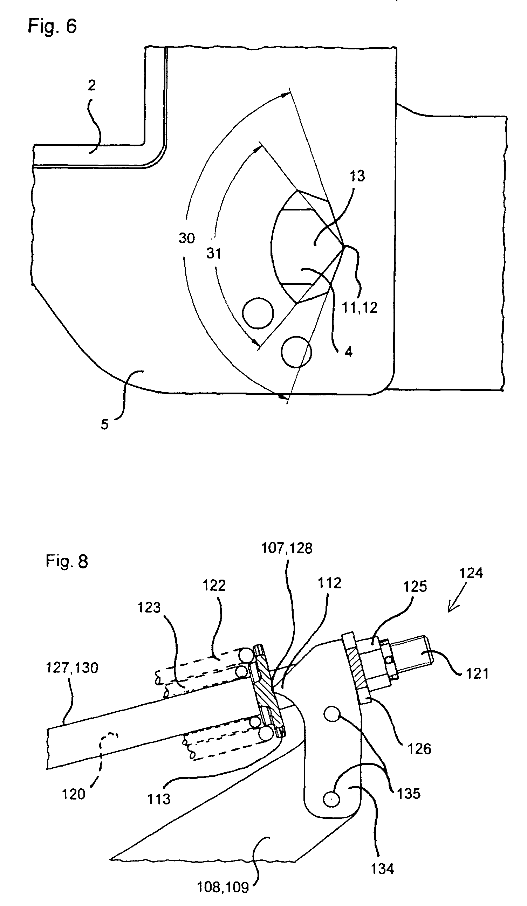

Eine Seitenansicht des Sektionsbolzens 13 im Detail mit der V-förmigen Lagerspitze 11 zeigt Fig. 6. Die V-förmige Lagerspitze 11 ist in der V-förmigen Aufnahme 12 gelagert. Diese Fig. 6 verdeutlicht auch, dass der Winkel 30 der V-förmigen Aufnahme 12 deutlich größer ist als der Winkel 31 der V-förmigen Lagerspitze 11. Die Differenz der beiden Winkel 30, 31 entspricht dem Winkel, innerhalb dem das Zinkennelement 3 bei Auftreffen auf ein Hindernis verschwenken kann bzw. dem Verschwenkwinkel der V-förmigen Lagerspitzen 11 in den V-förmigen Aufnahmen 12 der diversen Gelenke 8, 9, 10 des Bodenbearbeitungsgerätes 1.

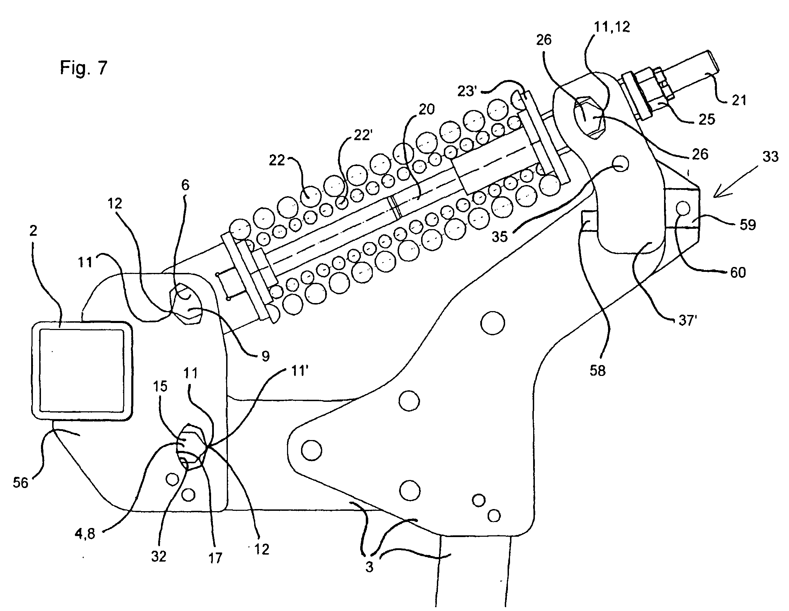

Auch Fig. 7 gibt wieder, dass alle Gelenklager 8, 9 und 10 die besondere Ausbildung mit der V-förmigen Lagerspitze 11 und den V-förmigen Aufnahme 12 verfügt. Hier ist weiter eine alternative Überlastsicherung mit Rückschlagdämpfung 33 dargestellt, wobei der Anschlaghebel 37' die Federkraft des Energiespeichers 5 über die Gelenkschraube 35 auf den Anschlag 58 überträgt. Bei einer Rückschlagkraft wird der Gummipuffer 59 belastet, der nachgibt und so den Rückschlag dämpft. Mit der Exzenterschraube 60 wird der Energiespeicher 5 mehr oder weniger gegen den Anschlaghebel 37' gepresst. Der Grad der Dämpfung bzw. Federung läßt sich so vorteilhaft einstellen.

Fig. 8 schließlich zeigt eine besondere Anordnung der Druckfedern 122, 123 der Zugstange 120, des Anschlagteller 113, der hier mit V-förmigen Kerben 128 bestückt ist. In die V-förmige Kerbe 128 greifen V-förmige Lagerspitzen 112. Dadurch, dass die V-förmige Lagerspitzen 112 des Anschlages 134 in die V-förmigen Kerben 128 des Anschlagteller s 113 eingreifen, wird die Gelenkachse 107 gebildet, die keinem Verschleiß unterworfen ist. Da die innere Druckfeder 123 mit der Zugstange 120 nur einen geringfügigen Führungskontakt hat, was hinsichtlich Verschleiß keine Nachteile darstellt, sind für den Verschleißschutz keine zusätzlichen Maßnahmen erforderlich. Dennoch wird zwischen der Zugstange 120 und den Druckfedern 123 bzw. 122 ein Rohr 127 vorgesehen, das vorzugsweise als Kunststoffrohr 130 ausgebildet ist. Durch dieses Kunststoffrohr 130 können zusätzlich noch die restlichen Verschleißrisiken minimiert und eliminiert werden. Auch hier erfolgt eine Einstellung über die auf dem Gewindeteil 121 der Fixierung 124 verschiebbaren Mutter 125. Mit 126 ist eine Scheibe bezeichnet, die zwischen dem Anschlag 134 und der Mutter 125 angeordnet ist. Mit 135 sind die Befestigungsschrauben bezeichnet. 109 ist die Verbindungsplatte zum hier nicht dargestellten Zinken 108.

## Patentansprüche

1. Bodenbearbeitungsgerät (1) mit Überlastsicherung für Zinkenelemente (3), die mit Scharen (39) ausgerüstet um eine waagerechte und quer zur Arbeitsrichtung angeordnete Achse (4) mit dem Rahmen (2) schwenkbar verbunden sind, wobei dem Zinkenelement (3) ein Energiespeicher (5) zugeordnet ist, der jeweils im Abstand zur Achse (4) sowohl mit dem Rahmen (2) als auch mit dem Zinkenelement (3) über waagerecht und quer zur Arbeitsrichtung angeordnete Gelenkachsen (6, 7) verbunden ist, wobei die hintere Gelenkachse (7) Teil eines Gelenklagers (10) ist, das eine V-förmige Lagerspitze (11) und eine V-förmige Aufnahme (12) aufweist und wobei die V-förmige Lagerspitze (11) in die V-förmige Aufnahme (12) eingreifend und sich dagegen abstützend ausgebildet ist,
**dadurch gekennzeichnet,**
**dass** die V-förmige Lagerspitze (11) als Sektionsbolzen (13) oder Sektionsbolzenansatz (19) ausgebildet ist, die auf der einen Längsseite einen V-förmigen Querschnitt (14) mit nach außen gerichteter Spitze (11') und auf der anderen Längsseite einen teilkreisbogenförmigen Querschnitt (15) aufweist, wobei der Abstand von der Spitze (11') zur Tangente (27) der teilkreisbogenförmigen Seite des Sektionsbolzens (13) dem Radius (17) des Teilkreises (18) entspricht.

2. Bodenbearbeitungsgerät nach Anspruch 1,
**dadurch gekennzeichnet,**
**dass** jedes Gelenklager (8, 9, 10) aus einer V-förmigen Lagerspitze (11) und aus einer V-förmigen Aufnahme (12) besteht und Mittel vorgesehen sind, die die V-förmige Lagerspitze (11) und die V-förmige Aufnahme (12) in Anlage haltend ausgebildet sind.

3. Bodenbearbeitungsgerät nach Anspruch 1,
**dadurch gekennzeichnet,**
**dass** der Energiespeicher (5) mindestens eine Zugstange (20) mit Anschlagteller (20'), eine Stangenführung (23) mit Anschlagteller (23') mit mindestens einer zwischen den Anschlagtellern (20', 23') vorgesehenen und durch die Zugstange(20) geführten Druckfeder (22) umfaßt, dass die Zugstange (20) endseitig ein Gewindeteil (21) aufweist und durch die Stangenführung (23) hindurchführbar und über eine Spannvorrichtung (24), vorzugsweise eine Mutter (25), die Druckfeder (22) vorspannend ausgebildet ist.

4. Bodenbearbeitungsgerät nach einem der vorhergehenden Ansprüche,
**dadurch gekennzeichnet,**
**dass** die Zugstange (20) rahmenseitig ein mit dem Querschnitt des Sektionsbolzens (26) korrespondierendes Loch aufweist, in dem der Sektionsbolzen (26) untergebracht ist, dass die Stangenführung (23) rechts und links Sektionsbolzenansätze (19) mit V-förmigen Lagerspitzen (11) aufweist und dass die Spitzen (11') der V-förmigen Lagerspitzen (11) nach außen weisend angeordnet sind.

5. Bodenbearbeitungsgerät nach einem der vorhergehenden Ansprüche,
**dadurch gekennzeichnet,**
**dass** die V-förmigen Aufnahme (12) einen größeren Winkel (30) aufweisen als die V-förmigen Lagerspitzen (11) mit dem Winkel (31).

6. Bodenbearbeitungsgerät nach einem der vorhergehenden Ansprüche, **dadurch gekennzeichnet,**
**dass** die V-förmigen Aufnahmen (12) einen mit dem Teilkreis (18) des Sektionsbolzens (13) bzw. der Sektionsbolzenansätze (26) korrespondierenden Radius aufweisen.

7. Bodenbearbeitungsgerät nach einem der vorhergehenden Ansprüche,
**dadurch gekennzeichnet,**
**dass** mindestens ein Anschlaghebel (37, 37') vorgesehen ist, der über eine Vorspannkraft den Sektionsbolzen (13) mit seiner Spitze (11') in die V-förmige Aufnahme (12) drückend ausgebildet ist und dass die Vorspannkraft größer ist als die Gewichtskraft des Zinkenelementes (3) mit Scharen (39).

8. Bodenbearbeitungsgerät nach einem der vorhergehenden Ansprüche,
**dadurch gekennzeichnet,**
**dass** der Anschlaghebel (37, 37') am Zinkenelement (3) schenkbar gelagert und über ein Federelement (38) vorgespannt und dass seine Vorspannkraft einstellbar und dass das Spiel zwischen Anschlaghebel (37, 37') und Sektionsbolzen (13) einstellbar ist.

9. Bodenbearbeitungsgerät (1) mit Überlastsicherung für Zinkenelemente (3), die mit Scharen (39) ausgerüstet um eine waagerechte und quer zur Arbeitsrichtung angeordnete Achse (4) mit dem Rahmen (2) schwenkbar verbunden sind, wobei dem Zinkenelement (3) ein Energiespeicher (5) zugeordnet ist, der jeweils im Abstand zur Achse (4) sowohl mit dem Rahmen (2) als auch mit dem Zinkenelement (3) über waagerecht und quer zur Arbeitsrichtung angeordnete Gelenkachsen (6, 7) verbunden ist, wobei die hintere Gelenkachse (7) Teil eines Gelenklagers (10) ist, das eine V-förmige Lagerspitze (11) und eine V-förmige Aufnahme (12) aufweist und wobei die V-förmige Lagerspitze (11) in die V-förmige Aufnahme (12) eingreifend und sich dagegen abstützend ausgebildet ist, ,
**dadurch gekennzeichnet,**
**dass** der Energiespeicher (5) mindestens eine Zugstange (120) mit Anschlagteller (113) und mit einer durch die Zugstange (120) geführten Druckfeder umfaßt und der Anschlagteller (113)auf seiner Rückseite eine quer zur Arbeitsrichtung angeordnete V-förmige Kerbe (128) aufweist, in die die V-förmige Lagerspitze (112) von Anschlägen (134) eingreifen, die mit dem Zinken (108) mittelbar oder unmittelbar verbunden sind, dass die Zugstange (120) endseitig eine Fixierung (124) aufweist, die sich auf der Rückseite der Anschläge (124) abstützend ausgebildet ist und dass der Anschlagteller (113) über die Druckfeder (123) geführt ist.

10. Bodenbearbeitungsgerät nach einem der vorhergehenden Ansprüche,
**dadurch gekennzeichnet,**
**dass** der Anschlagteller (113) außen, endseitig der V-förmigen Kerben (128) Führungskanten (114) aufweist, die ein seitliches Verrutschen der V-förmigen Lagerspitzen (112) der Anschläge (134) verhindernd ausgebildet und angeordnet sind.

11. Bodenbearbeitungsgerät nach einem der vorhergehenden Ansprüche,
**dadurch gekennzeichnet,**
**dass** zwischen der Zugstange (120) und der Feder (123) ein als Verschleißschutz dienendes Kunststoffrohr (130) vorgesehen ist.

## Claims

1. A soil cultivation implement (1) having an overload protection device for tine elements (3), which are equipped with shares (39) and are connected to the frame (2) to pivot around a horizontal axis (4) disposed transversely to the direction of cultivation, wherein associated with the tine element (3) is an energy storage device (5), which spaced from the axis (4), is connected to the frame (2) and also to the tine element (3) via articulated axles (6, 7) disposed horizontally and transversely to the direction of cultivation, wherein the rear articulated axle (7) is part of a pivoting bearing (10) having a V-shaped pivot point (11) and a V-shaped seat (12) and wherein the V-shaped pivot point (11) is designed to engage in the V-shaped seat (12) and to be supported against it,
**characterised in that** the V-shaped pivot point (11) is constructed as a sectional pin (13) or sectional pin projection (19), which on the one longitudinal side comprises a V-shaped cross section (14) having an outwardly directed point (11') and on the other longitudinal side a cross section shaped as a graduated circle (15), the distance from the point (11') to the tangent (27) of the side shaped as a graduated circle of the sectional pin (13) corresponding to the radius (17) of the graduated circle (18).

2. A soil cultivation implement according to Claim 1,
**characterised in that** each pivoting bearing (8, 9, 10) consists of a V-shaped pivot point (11) and a V-shaped seat (12) and means are provided which are constructed to hold the V-shaped bearing point (11) and the V-shaped seat (12) in abutment.

3. A soil cultivation implement according to Claim 1,
**characterised in that** the energy storage device (5) comprises at least one connecting rod (20) with stop plates (20'), a rod guide (23) with stop plates (23') with at least one compression spring provided between the stop plates (20', 23') and guided by the connecting rod (20),
**in that** the connecting rod (20) comprises a threaded part (21) at the end and can be passed through the rod guide (23) and is designed to pretension the compression spring (22) via a tensioning device (24), preferably a nut (25).

4. A soil cultivation implement according to one of the preceding Claims,
**characterised in that** the connecting rod (20) on the frame side has a hole corresponding to the cross section of the sectional pin (26), in which the sectional pin (26) is housed,
**in that** on the right and left the rod guide (23) comprises sectional pin projections (19) with V-shaped pivot points (11)
and **in that** the points (11') of the V-shaped pivot points (11) are disposed pointing outwards.

5. A soil cultivation implement according to one of the preceding Claims,
**characterised in that** the V-shaped seats (12) have a larger angle (30) than the V-shaped pivot points (11) with the angle (31).

6. A soil cultivation implement according to one of the preceding Claims,
**characterised in that** the V-shaped seats (12) comprise a radius corresponding to the graduated circle (18) of the sectional pin (13) or of the sectional pin projections (26).

7. A soil cultivation implement according to one of the preceding Claims,
**characterised in that** at least one stop lever (37, 37') is provided, which via a pretensioning force is designed to press the sectional pin (13) with its point (11') into the V-shaped seat (12)
and **in that** the pretensioning force is greater than the weight force of the tine element (3) with shares (39).

8. A soil cultivation implement according to one of the preceding Claims,
**characterised in that** the stop lever (37, 37') is pivoted on the tine element (3) and is pretensioned via a spring element (38)
and **in that** its pretensioning force is adjustable
and **in that** the clearance between stop lever (37, 37') and sectional pin (13) is adjustable.

9. A soil cultivation implement (1) having an overload protection device for tine elements (3), which are equipped with shares (39) and are connected to the frame (2) to pivot around a horizontal axis (4) disposed transversely to the direction of cultivation, wherein associated with the tine element (3) is an energy storage device (5), which, spaced from the axis (4), is connected to the frame (2) and also to the tine element (3) via articulated axles (6, 7) disposed horizontally and transversely to the direction of cultivation, wherein the rear articulated axle (7) is a part of a pivoting bearing (10) comprising a V-shaped pivot point (11) and a V-shaped seat (12) and wherein the V-shaped pivot point (11) is constructed to engage in the V-shaped seat (12) and to be supported against it,
**characterised in that** the energy storage device (5) comprises at least one connecting rod (120) with stop plates (113) and with a compression spring (122) guided by the connecting rod (120) and the stop plate (113) comprises on its rear side a V-shaped notch (128) disposed transversely to the direction of cultivation, into which the V-shaped pivot point (112) of stops (134) engage, which are connected indirectly or directly to the tine (108),
**in that** at the end the connecting rod (120) comprises a fixing (124) which is constructed to be supported on the rear of the stops (124)
and **in that** the stop plate (113) is guided via the compression spring (123).

10. A soil cultivation device according to one of the preceding Claims,
**characterised in that** at the end of the V-shaped notches (128) the stop plate (113) comprises guide edges (114) which are constructed and disposed to prevent a lateral slipping of the V-shaped pivot points (112) of the stops (134).

11. A soil cultivation device according to one of the preceding Claims,
**characterised in that** a plastic tube (130) serving as an anti-abrasion device is provided between the connecting rod (120) and the spring (123).

## Revendications

1. Outil de travail du sol (1) comportant un dispositif de protection en cas de surcharge pour des éléments en forme de branches (3), qui sont reliés à des socs (39) et montés au cadre (2) de manière à pouvoir pivoter autour d'un axe horizontal et transversal par rapport à la direction de travail, dans lequel à l'élément en forme de branche (3) est associé un accumulateur d'énergie (5), qui est relié respectivement, à distance de l'axe (4), aussi bien au cadre (2) qu'à l'élément en forme de branche (3) par l'intermédiaire d'axes d'articulation horizontaux (6, 7), qui s'étendent transversalement par rapport à la direction de travail, et dans lequel l'axe arrière d'articulation (7) fait partie d'un support articulé (10), qui possède une pointe de support en forme de V (11) et un logement en forme de V (12) et dans lequel la pointe de support en forme de V (11) est agencée de manière à s'engager dans le logement en forme de V (12) et à prendre appui dans ce dernier,
**caractérisé en ce**
**que** la pointe de support en forme de V (11) est agencée sous la forme d'un boulon de section (13) ou d'un embout (19) de boulon de section, qui possède, sur un côté longitudinal, une section transversale en forme de V (14) possédant une pointe (11') dirigée vers l'extérieur et, sur l'autre côté, une section transversale en forme d'arc de cercle partiel (15), la distance entre la pointe (11') et la tangente (27) du côté, en forme d'arc de cercle partiel, du boulon de section (13) correspondant au rayon (17) du cercle partiel (18).

2. Outil de travail du sol selon la revendication 1, **caractérisé en ce que** chaque support articulé (8, 9, 10) est constitué par une pointe de support en forme de V (11) et par un logement en forme de V (12) et qu'il est prévu des moyens agencés de manière à maintenir appliqués entre eux la pointe de support en forme de V (11) et le logement en forme de V (12).

3. Outil de travail du sol selon la revendication 1, **caractérisé en ce que** l'accumulateur d'énergie (5) comporte au moins une tige de traction (20) comportant un disque de butée (20'), un guide de tige (23) comportant un disque de butée (23') avec au moins un ressort de pression (22), qui est prévu entre les disques de butée (20', 23') et qui est guidé par la tige de traction (20), que la tige de traction (20) comporte à son extrémité une partie filetée (22) et peut traverser le guide de tige (23) et précontraint le ressort de pression (22) au moyen d'un dispositif de serrage (24) de préférence un écrou (25).

4. Outil de travail du sol selon l'une des revendications précédentes, **caractérisé en ce que** la tige de traction (20) comporte, côté cadre, un trou, qui correspond à la section transversale du boulon de section (26) et dans lequel est logé le boulon de section (26), que le guide de tige (23) comporte, à droite et à gauche, des embouts (19) du boulon de section possédant des pointes de support en forme de V (11) et que les sommets (11') des pointes de support en forme de V (11) sont disposées de manière à être dirigées vers l'extérieur.

5. Outil de travail du sol selon l'une des revendications précédentes, **caractérisé en ce que** les logements en forme de V (12) possèdent un angle (30) supérieur à l'angle (31) que comporte les pointes de support en forme de V (11).

6. Outil de travail du sol selon l'une des revendications précédentes, **caractérisé en ce que** les logements en forme de V (12) possèdent un rayon qui correspond au cercle partiel (18) du boulon de section (13) ou aux embouts (26) du boulon de section.

7. Outil de travail du sol selon l'une des revendications précédentes, **caractérisé en ce qu'**il est prévu au moins un levier de butée (37, 37') qui est agencé de manière à repousser, par l'intermédiaire d'une force de précontrainte, le boulon de section (13) avec son sommet (11') dans le logement en forme de V (12) et que la force de précontrainte est supérieure au poids de l'élément en forme de branche (3) pourvu de socs (39).

8. Outil de travail du sol selon l'une des revendications précédentes, **caractérisé en ce que** le levier de butée (37, 37') est monté de manière à pouvoir pivoter sur l'élément en forme de branche (3) et précontraint au moyen d'un élément de ressort (38) et que sa force de précontrainte est réglable et que le jeu entre le levier de butée (37, 37') et le boulon de section (13) est réglable.

9. Outil de travail du sol (1), comportant un dispositif de protection contre les surcharges pour des éléments en forme de branches (3), qui sont reliés à des socs (39) montés au cadre (2) de manière à pouvoir pivoter autour d'un axe horizontal et transversal par rapport à la direction de travail, dans lequel à l'élément en forme de branche (3) est associé un accumulateur d'énergie (5), qui est relié respectivement, à distance de l'axe (4), aussi bien au cadre (2) qu'à l'élément en forme de branche (3) par l'intermédiaire d'axes d'articulation horizontaux (6, 7), qui s'étendent transversalement par rapport à la direction de travail, et dans lequel l'axe arrière d'articulation (7) fait partie d'un support articulé (10), qui possède une pointe de support en forme de V (11) et un logement en forme de V (12) et dans lequel la pointe de support en forme de V (11) est agencée de manière à s'engager dans le logement en forme de V (12) et à prendre appui dans ce dernier,
**caractérisé en ce**
**que** l'accumulateur d'énergie (5) comprend au moins une tige de traction (120) comportant un disque de butée (113) et un ressort de pression (122) guidé par la tige de traction (120) et que le disque de butée (113) comporte, sur son côté arrière, une encoche en forme de V (128), qui est disposée transversalement par rapport à la direction de travail et dans laquelle s'engagent les pointes de support en forme de V (112) de butées (134) qui sont reliées directement ou indirectement à la branche (108), que la tige de traction (120) comporte, du côté de son extrémité, une fixation (124), qui est réalisée de manière à prendre appui sur le côté arrière des butées (134) et que le disque de butée (113) est guidé par l'intermédiaire du ressort de pression (123).

10. Outil de travail du sol selon l'une des revendications précédentes, **caractérisé en ce que** le disque de butée (113) comporte extérieurement, du côté de l'extrémité des encoches (128) en forme de V, des bords de guidage (114), qui sont agencés et sont disposés de manière à empêcher un dérapage latéral des pointes de support en forme de V (112) des butées (134).

11. Outil de travail du sol selon l'une des revendications précédentes, **caractérisé en ce qu'**un tube de matière plastique (130), qui sert de système de protection contre l'usure, est prévu entre la tige de traction (120) et le ressort (123).
